# EUROPÄISCHE PATENTSCHRIFT

(11) **EP 1 165 339 B1**
(45) Veröffentlichungstag und Bekanntmachung des Hinweises auf die Patenterteilung: **03.09.2003**
(21) Anmeldenummer: 00912244.1
(22) Anmeldetag: 10.03.2000
(51) Int. Cl.: B60K 15/04, B60K 15/035

(54) **EINFÜLLSTUTZEN FÜR DEN TREIBSTOFFTANK EINES KRAFTFAHRZEUGES**
FILLER NECK FOR THE FUEL TANK OF A MOTOR VEHICLE
TUBULURE DE REMPLISSAGE POUR LE RESERVOIR DE CARBURANT D'UN VEHICULE AUTOMOBILE

(30) Priorität: 12.03.1999 AT 17299 U
(43) Veröffentlichungstag der Anmeldung: 02.01.2002
(73) Patentinhaber: Tesma Motoren- und Getriebetechnik Ges.m.b.H., 8160 Preding-Krottendorf (AT)
(72) Erfinder: MAIER, Bernhard, A-8344 Bad Gleichenberg (AT)
(74) Vertreter: Kovac, Werner, Dipl.-Ing.
(86) Internationale Anmeldenummer: AT0000060
(87) Internationale Veröffentlichungsnummer: WO00054999

(56) Entgegenhaltungen:
- US-A- 4 941 587

## Beschreibung

Die Erfindung betrifft einen Einfüllstutzen für den Treibstofftank eines Kraftfahrzeuges mit einem Gehäuse mit einem in die Schließ- und Offenstellung schwenkbaren äußeren Verschluss und einem zweiten im Gehäuseinneren untergebrachten von der Zapfpistole aufklappbaren inneren Verschlusselement, und mit einem Entlüftungsventil, welches einen gegen die Kraft der Feder verschiebbaren Ventilteil aufweist und welches sich bei einem Überdruck im Treibstofftank zum Zwecke des Druckausgleichs selbsttätig und beim Aufklappen des Verschlusselementes über einen mit diesem wirkverbundenen Mechanismus öffnet.

Ein derartiger Einfüllstutzen ist beispielsweise aus der WO-A-99/03697 bekannt. Bei diesem Einfüllstutzen handelt es sich um einen solchen, bei dem, entgegen den allgemein üblichen Ausführungen, kein beim Öffnen entfernbarer, insbesondere am Einfüllstutzen aufschraubbarer Verschluss vorgesehen ist. Bei den üblichen Einfüllstutzen mit derartigen gesonderten Verschlüssen besteht die Gefahr, dass der Benützer nach dem Tanken vergisst, den Tankverschluss wieder aufzuschrauben, und dass die meist am Kraftfahrzeug abgelegten Verschlüsse verloren gehen. Es können dann einerseits von außen Verschmutzungen in das Innere des Tanks gelangen und andererseits Treibstoffdämpfe aus dem Tank entweichen.

Diese Nachteile weist nun der aus der WO-A-99/03697 bekannte Einfüllstutzen nicht auf, da der äußere Verschluss am Einfüllstutzen selbst auf- und zuklappbar gelagert ist. Dieser Verschluss ist konstruktiv so ausgeführt, dass bei geschlossenem Verschluss durch ein Filterelement von außen Luft in das Innere gelangen kann und von innen Treibstoffdämpfe auch nach außen entweichen können. Darüber hinaus ist dieser Einfüllstutzen mit einem Entlüftungsventil und mit einem zweiten, weiter innen im Gehäuse des Einfüllstutzens schwenkbar gelagerten Verschlusselement versehen. Dieses Verschlusselement gewährleistet in seiner geschlossenen Lage eine gasdichte Abdichtung zwischen dem Treibstofftank auf der einen Seite und dem zum äußeren Verschluss verbleibenden Innenraum des Einfüllstutzens. Wenn sich nun während des Treibstoffverbrauchs im Tankinneren ein Unterdruck einstellt, kann sich das zweite Verschlusselement selbsttätig etwas öffnen, so dass zum Druckausgleich Umgebungsluft in das Tankinnere einfließen kann. Dies wird über einen das Verschlusselement beaufschlagenden Betätigungsarm, der mit einer vergleichsweise schwachen Feder in Wirkverbindung steht, gewährleistet. Stellt sich ein gewisser Überdruck im Treibstofftank ein, ist sichergestellt, dass sich das Entlüftungsventil selbsttätig öffnet. Ein Öffnen des Entlüftungsventils findet auch beim Einführen der Zapfpistole statt, wenn diese das zweite Verschlusselement beim Einführen aufklappt. Dadurch ist die erforderliche Belüftung des Tanks beim Einfüllen des Treibstoffs sichergestellt. Dieser bekannte Einfüllstutzen ist von seiner Funktionsweise und seiner Konstruktion her gut durchdacht. Nach dem Betanken, nach dem Füllen des Treibstofftanks, bleibt oft etwas Treibstoff im Innenraum oberhalb des zweiten Verschlusselementes zurück und sammelt sich insbesondere auf der äußeren Seite dieses Verschlusselementes. Wird nun die Zapfpistole zum neuerlichen Füllen des Tanks wieder eingeführt, wird, wie oben erwähnt, das zweite Verschlusselement von der Zapfpistole in die Offenstellung gedrückt, wobei durch den im Bereich innerhalb des Verschlusselementes herrschenden, leichten Überdruck des Treibstoffdampfes - ca. 0,15 bar Überdruck - die angesammelten Treibstoffreste aus dem Einfüllstutzen herausspritzen. Dies ist unangenehm für die das Tanken durchführende Person.

Aus der US-A-4,941,587 ist ein Einfüllstutzen für den Treibstofftank eines Kraftfahrzeuges mit einem innen liegenden und aufklappbar gelagerten Verschlusselement bekannt, welches ebenfalls durch die Zapfpistole in seine geöffnete Lage bringbar ist. Außerhalb des inneren Verschlusselementes ragt ein schwenkbar gelagerter Hebel in den Zuführweg der Zapfpistole, sodass beim Einführen derselben der Hebel zwangsweise betätigt wird. Der Hebel ist durch eine Druckstange mit einem federbeaufschlagten Ventilteil eines Entlüftungsventils wirkverbunden. Durch ein Öffnen des Ventils, was über den von der Zapfpistole verschwenkten Hebel und die von diesem beaufschlagte Druckstange erfolgt, wird eine Passage zwischen einer vom Tank kommenden Leitung und einer weiteren zu einem Auffangbehälter führenden Leitung freigegeben. Dadurch können beim Befüllen des Tanks Treibstoffdämpfe aus dem Tank entweichen bzw. in den Auffangbehälter geleitet werden. Dieser bekannte Mechanismus erfüllt keine weiteren Funktionen, insbesondere ist über dieses Ventil kein Druckausgleich im Falle von Über- oder Unterdruck möglich.

Ein Einfüllstutzen gemäss dem Oberbegriff des Anspruch 1 is aus US 4,951,587 bekannt.

Die Erfindung hat sich daher die Aufgabe gestellt, den aus der WO-A-99/03697 bekannten Einfüllstutzen zu verbessern und durch eine einfache Maßnahme sicherzustellen, dass ein Herausspritzen von Treibstoffresten unterbleibt.

Gelöst wird die gestellte Aufgabe erfindungsgemäß durch die Merkmalen des Anspruchs 1.

Die Erfindung stellt daher sicher, dass der im Tankinneren herrschende leichte Überdruck bereits abgebaut wird, bevor das innere Verschlusselement geöffnet wird. Dadurch wird ein Herausspritzen von oberhalb des zweiten Verschlusselementes befindlichem Resttreibstoff wirkungsvoll verhindert. Die erfindungsgemäße Lösung hat keine Auswirkungen auf die sonstigen Funktionen des Einfüllstutzens, sie ist konstruktiv einfach und lässt sich auch auf einfache Weise im Bereich des Entlüftungsventils unterbringen.

Die am Ventilteil vorgesehenen Führungsteile sind einwärts gerichtete Fortsätze von seitlich des Ventilteils vorgesehenen Laschen. Auch diese Konstruktion stellt sicher, dass keine Beeinträchtigung der sonstigen Funktions- und Wirkungsweise des Einfüllstutzens durch die Führungsteile erfolgen kann. Darüber hinaus bilden diese Führungsteile gleichzeitig eine Montagehilfe, indem sie beim Montieren des Ventils und der mit diesem zusammenwirkenden Bauteile die schwächeren Federn, die die Betätigungsstange beaufschlagen, in einer gespannten Lage halten.

Das komplette Öffnen des Entlüftungsventils soll weiterhin über ein Aufklappen des inneren Verschlusselementes durch die Zapfpistole erfolgen. Es reicht ein geringfügiges Öffnen des Entlüftungsventils zum Ausgleich des leichten Überdrucks im Tankinneren. Zu diesem Zweck werden die mit dem Führungsteilen des Ventilteils zusammenwirkenden Bereiche der Betätigungsarme des Hebels als Steuerkurven ausgestaltet, die das erwünschte geringfügige Öffnen gewährleisten.

Um den zusätzlichen Hebel nach dem Entfernen der Zapfpistole wieder in seine Ausgangslage zu bringen und dort zu halten, wird der Hebel durch eine Feder entsprechend beaufschlagt.

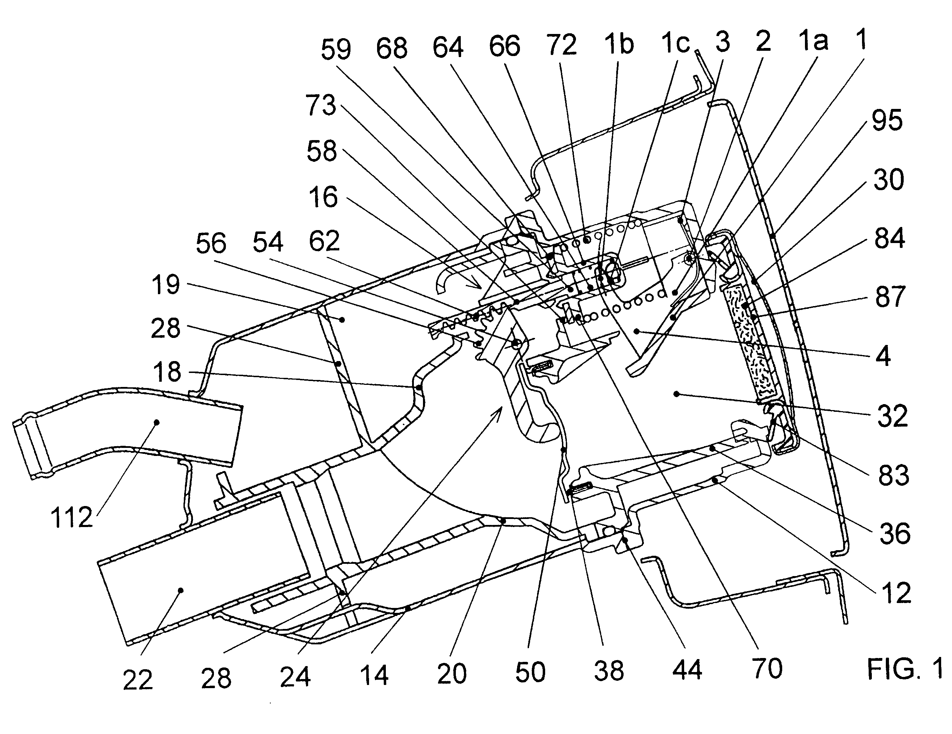

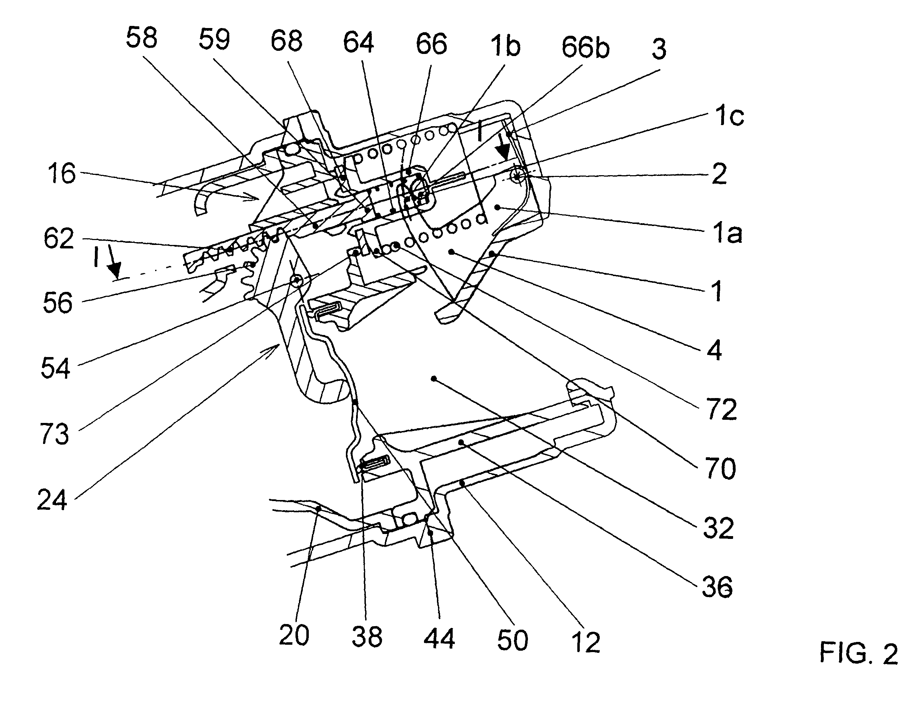

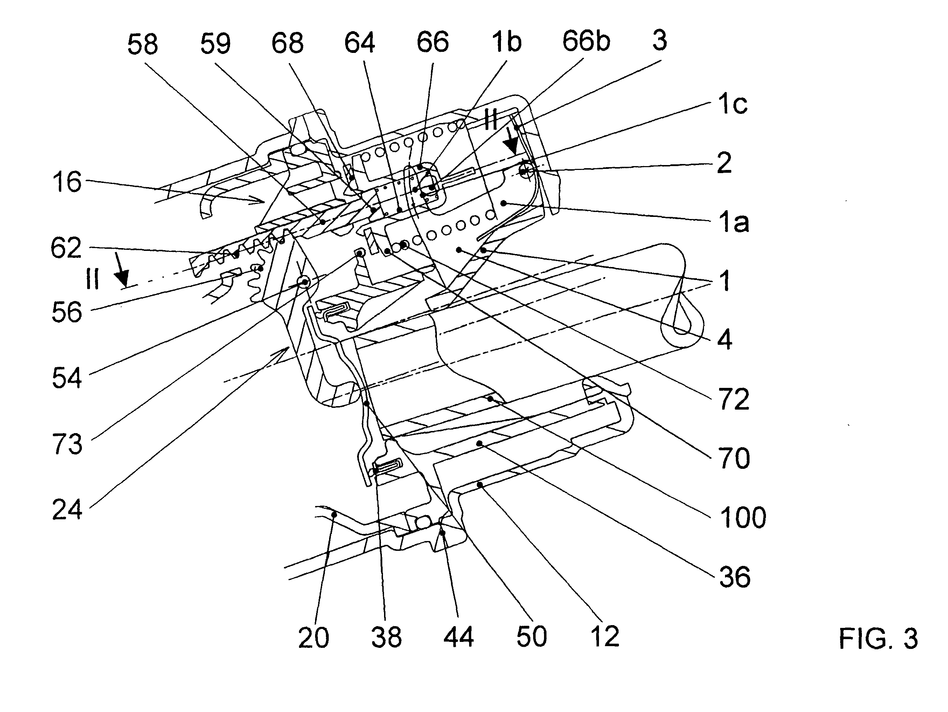

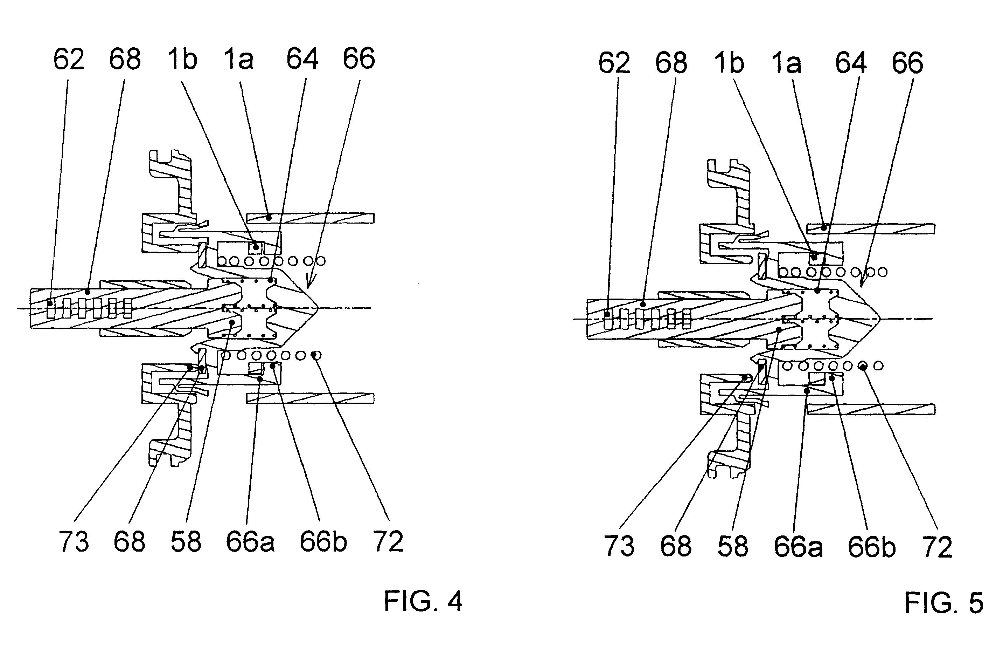

Weitere Merkmale, Vorteile und Einzelheiten der Erfindung werden nun anhand der Zeichnung, die ein Ausführungsbeispiel darstellt, näher beschrieben. Dabei zeigt Fig. 1 einen Längsschnitt durch einen gemäß der gegenständlichen Erfindung ausgeführten Einfüllstutzen in seiner geschlossener Lage, Fig. 2 den äußeren Teilbereich des Einfüllstutzens aus Fig. 1 in einer etwas vergrößerten Darstellung, Fig. 3 den äußeren Teilbereich des Einfüllstutzens aus Fig. 1 ebenfalls im Längsschnitt während des Einführens einer Zapfpistole, Fig. 4 zeigt einen Schnitt entlang der Linie I-I der Fig. 2 und Fig. 5 einen Schnitt entlang der Linie II-II der Fig. 3. Fig. 4und Fig. 5 sind daher Schnitte in einer Ebene lotrecht zur Zeichnungsebene der Fig. 1 und Fig. 2.

Anhand der Fig. 1 und 2 wird vorerst der grundsätzliche Aufbau des Einfüllstutzens beschrieben, der großteils mit dem Aufbau des aus der WO 99/03697 in den Fig. 2 bis 6 dargestellten Ausführungsbeispieles eines Einfüllstutzens entspricht.

Der in Fig. 1 und Fig. 2 dargestellte Einfüllstutzen besitzt einen äußeren Gehäuseteil 12, einen inneren Gehäuseteil 14 und ein in seiner Gesamtheit mit 16 bezeichnetes Entlüftungsventil. Der innere und der äußere Gehäuseteil 12, 14 sind an einer umlaufenden Verbindungsstelle 44 miteinander fest und gasdicht verbunden. Am inneren Gehäuseteil 14 ist eine spiralförmige Führung 18 mit einem trichterartig gestalteten Bereich 20, welcher die Zapfpistole bei ihrem Einsetzen zum Betanken in die richtige Lage zum Befüllen des Tanks durch das Rohr 22 bringt, ausgebildet. Am äußeren Bereich der spiraligen Führung 18 sind Fortsätze 28 vorgesehen, die sich bis zum äußeren Gehäuseteil 14 erstrecken. Dabei sind der innere und der äußere Gehäuseteil 12, 14 so ausgestaltet, dass ein Pfad 19 für Treibstoffdampf gebildet ist, der sich, wenn das Ventil 16 geöffnet ist, über das Ventil 16 fortsetzt.

Am äußeren Gehäuseteil 12 ist ein äußerer Verschluss 30 in nicht dargestellter Weise auf- und zuklappbar gelagert. Die diesbezügliche Ausgestaltung kann wie insbesondere in den Fig. 3 und 4 der WO 99/03697 dargestellt erfolgen. Beim Betanken wird der Verschluss 30 durch Aufklappen geöffnet, wobei durch eine entsprechende Beaufschlagung mit einer Feder in hier nicht dargestellter Weise sichergestellt werden kann, dass der Verschluss 30 in seiner geöffneten Lage verbleibt. Eine im inneren Randbereich des Verschlusses 30 eingesetzte Gummidichtung 83 sorgt für eine gute Auflage des Verschlusses 30 am äußeren Gehäuseteil 12.

Das Entlüftungsventil 16 ist in Wirkverbindung mit einem inneren Verschlusselement 50, das über einen Betätigungsarm 24 an eine ringartig umlaufende Dichtung 38, die in einem mit dem äußeren Gehäuseteil 12 verbundenen Teil 36 untergebracht ist, gedrückt wird. Das zweite, innere Verschlusselement 50 wirkt in der Art eines Klappenventils. Über Bolzen 54 ist der Betätigungsarm 24 gehäusefest verschwenkbar gelagert. Hier ist auch das Verschlusselement 50 in nicht dargestellter Weise schwenkbar angeordnet. Der auf der einen Seite der Schwenkachse vorgesehene und L-förmig gestaltete Bereich des Betätigungsarms 24 beaufschlagt dabei das Verschlusselement 50, der Bereich auf der zweiten Seite der Schwenkachse ist zahnradartig ausgebildet und daher mit einer Anzahl von Zähnen 56 versehen, die mit einer Zahnleiste 62 einer Betätigungsstange 58 im Eingriff sind und mit dieser zusammenwirken.

Die Betätigungsstange 58 ragt mit ihrem einen Endbereich 59 in einen Hohlraum eines Ventilteils 66 und bildet derart einen in diesem Hohlraum verschiebbaren Kolben. Wie aus Fig. 1 in Verbindung mit Fig. 3 ersichtlich ist, beaufschlagt die Betätigungsstange 58 zwei Schraubenfedern 64, die sich mit ihren zweiten Enden am geschlossenen Endbereich des Hohlraumes des Ventilteils 66 abstützen. Die Spiralfedern 64 drücken über die Betätigungsstange 58 den Betätigungsarm 64 auf das Verschlusselement 50, so dass dieses in seiner geschlossenen und gasdichten Lage gehalten wird.

An seinem ins Innere des Einfüllstutzens weisenden Außenbereich ist der Ventilteil 66 mit einem umlaufenden Flansch 70 versehen, wo sich das eine Ende einer weiteren Spiralfeder 72, die eine größere Federkonstante besitzt als die Federn 64, abstützt. Mit ihrem zweiten Ende stützt sich die Feder 72 an einem mit dem Gehäuseteil 12 fest verbundenen Widerlager ab. Die Feder 72 drückt den Ventilteil 66 unter Zwischenschaltung einer Dichtung 68, die in einer umlaufenden Vertiefung des Ventilteils 66 sitzt, gegen einen Ansatz 73, der am gehäusefesten Teil 36 vorgesehen ist, so dass hier eine gasdichte Abdichtung gegeben ist.

Über hier nicht dargestellte Öffnungen im gehäusefesten Teil 36 können bei geöffnetem Ventil 16 Treibstoffdämpfe in den Innenraum 32 oberhalb des Verschlusselementes 50 entweichen.

Der Verschluss 30 ist so konstruiert, dass in das Innere des Einfüllstutzens auch dann Luft eindringen kann, wenn der Verschluss 30 geschlossen ist. Zu diesem Zweck ist eine mit Löchern versehene Abdeckung 87 vorgesehen und an der inneren Seite des Verschlusses 30 ein Filter 84 eingesetzt, durch welches ein unerwünschtes Eindringen von Schmutz vermieden wird.

Es wird ferner eine in Fig. 1 nur angedeutete Klappe 95 am Fahrzeug selbst vorgesehen, die in herkömmlicher Art und Weise am Fahrzeug auf- und zuklappbar gelagert sein kann. Dabei kann über geeignete Maßnahmen, beispielsweise wie jene, die aus der WO 99/0367 bekannt sind, vorgesehen werden, dass ein Öffnen und Schließen des Verschlusses 30 gemeinsam mit einer Betätigung der Klappe erfolgt.

Wie insbesondere aus Fig. 2 in Verbindung mit Fig. 4 ersichtlich ist, ist ferner ein Hebel 1 vorgesehen, welcher zwei seitliche Hebelarme 1a besitzt, die mit je einem Betätigungsansatz 1b versehen sind. Der Hebel 1 ist mittels Bolzen 2 oder dergleichen am äußeren Gehäuseteil 12 drehbar gelagert.

Fig. 1, 2 und 4 zeigen die Ruhelage des Hebels 1. Über einen Schlitz 4 im gehäusefesten Teil 36 ragt der Hebel 1 in den Innenraum 32 so weit hinein, dass beim Einführen einer Zapfpistole der Hebel 1 zwangsweise betätigt wird. Wie aus Fig. 4 ersichtlich ist, untergreift jeder der beiden Arme 1a mit seinem Betätigungsansatz 1b je einen Führungsteil 66b am Ventilteil 66. Die Führungsteile 66b sind am Ventilteil 66 an seitlich nach oben weisende Laschen 66a als einwärts gerichtete Fortsätze ausgebildet. Die Führungsteile 66b dienen gleichzeitig als Montagehilfe, da sie beim Montieren des Ventils und der mit diesem zusammenwirkenden Bauteile die schwächeren Federn 64, die die Betätigungsstange 68 beaufschlagen, in einer gespannten Lage halten.

Die mit den beiden Führungsteilen 66b des Ventilteils 66 in Kontakt tretenden Bereiche der Ansätze 1b des Hebels 1 sind als Steuerkurven 1c ausgelegt, durch die beim Einführen der Zapfpistole 100, die ein Verschwenken des Hebels 1 zur Folge hat, ein geringfügiges Anheben des Ventilteils 66 gegen die Kraft der Feder 72 erfolgt und damit auch ein Öffnen des Ventils 16.

Die entsprechende Lage des Hebels 1 bei eingeführter Zapfpistole 100, bevor diese das innere Verschlusselement 50 erfasst, ist aus den Fig. 3 und 5 ersichtlich. Durch den schmalen Spalt zwischen der Ventildichtung 68 und dem Ansatz 73 kann nun ein Druckausgleich zwischen dem Tankinneren und dem Innenraum 32 stattfinden. Dadurch wird der im Tankinneren herrschende leichte Überdruck abgebaut, bevor das innere Verschlusselement 50 von der Zapfpistole 100 aufgeklappt wird. Etwaige an der Außenseite des Verschlusselementes 50 oder den Wänden des Innenraums 32 befindliche Treibstoffreste werden so beim Öffnen des Verschlusselementes 50 nicht nach außen gespritzt.

Beim Entfernen der Zapfpistole 100 wird der Hebel 1 über eine ihn beaufschlagende Blattfeder 3 wieder in seine Ausgangslage gebracht.

Der Einfüllstutzen erfüllt verschiedene weitere Funktionen, die im Folgenden kurz beschrieben werden.

Wird etwa während des Betriebes des Fahrzeuges Treibstoff verbraucht, bildet sich im Treibstofftank Unterdruck. Erreicht der Unterdruck einen Wert, der die Kraft der Federn 64 übersteigt, wird das Verschlusselement 50 selbsttätig gegen die Kraft der Federn 64 in eine leicht geöffnete Position gedrückt. Nun kann Umgebungsluft durch die Löcher in der Abdeckung 87 und durch das Filter 64 eindringen, so dass der Unterdruck ausgeglichen wird und sich das Verschlusselement 50 unter der Kraft der Federn 64 selbsttätig wieder schließt. Die dabei stattfindenden relativ kleinen Bewegungen der beteiligten Bauteile bewirken kein Öffnen des Entlüftungsventils 16.

Beim Auftreten eines Überdrucks im Treibstofftank kann der Dampfdruck derart hoch werden, dass die stärkere Feder 72 komprimiert, der Ventilteil 66 somit verschoben und das Ventil 16 dadurch geöffnet wird, so dass der Treibstoffdampf in den Innenraum 32 und von dort durch den Verschluss 30 nach außen entweichen kann.

Wird nun ausgehend von der in Fig. 3 dargestellten Lage die Zapfpistole 100 weiter eingeführt, wird das Verschlusselement 50 aufgeklappt, wobei über den Betätigungsarm 24 die Betätigungsstange 58 unter Zusammendrücken der Schraubenfedern 64 und der Feder 72 verschoben wird, wodurch das Ventil 16 komplett offnet. Während des Tankbefüllens kann daher ein Belüften des Tanks einerseits durch das Einfüllrohr 22 und andererseits auch durch ein gesondert vorgesehenes Entlüftungsrohr 112 erfolgen.

Die spiralförmige Führung 18 trägt dazu bei, dass unter der Wirkung der Trägheitskraft und/oder der Zentrifugalkraft Flüssigkeitsteilchen aus dem Treibstoffdampf abgeschieden werden, bevor sie das Ventil 16 erreichen.

Wird die Zapfpistole 100 wieder entfernt, schließt sich vorerst unter der Wirkung der Feder 72 das Ventil 16 und anschließend wird das Verschlusselement 50 unter Wirkung der Federn 64 in seine geschlossene Lage gebracht.

Die Erfindung ist auf die dargestellte und beschriebene Ausführungsform nicht eingeschränkt. So ist es insbesondere auch möglich, bei diesem Einfüllstutzen ein ORVR (Refueling Vapour Recovery) System vorzusehen, bei dem über eine gesonderte Vorrichtung der durch das Ventil entweichende Treibstoffdampf wieder rückgeführt wird. Bezüglich einer möglichen Ausgestaltung eines derartigen Systems wird auf die in der WO 99/03697 geoffenbarten Varianten hingewiesen.

## Patentansprüche

1. Einfüllstutzen für den Treibstofftank eines Kraftfahrzeuges mit einem Gehäuse (12,14), mit einem in die Schliess- und Offenstellung schwenkbaren äusseren Verschluss (30) und einem zweiten im Gehäuseinneren untergebrachten von der Zapfpistole (100) aufklappbaren inneren Verschlusselement (50) und mit einem Entlüftungsventil (16), welches sich bei einem Überdruck im Treibstofftank zum Zwecke des Druckausgleichs selbsttätig öffnet, wobei am Gehäuse (12) zwischen äusserem Verschluss (30) und innerem Verschlusselement (50) ein Hebel (1) schwenkbar gelagert ist, welcher, durch die Zapfpistole (100) beim Einführen derselben betätigt, das Entlüftungsventil (16) bereits öffnet bevor die Zapfpistole (100) das innere Verschlusselement (50) betätigt,
**dadurch gekennzeichnet,**
**dass** der Hebel (1) zwei seitliche Betätigungsarme (1a) aufweist, die am Ventilteil (66) vorgesehene Führungsteile (66b) untergreifen, und dass das innere Verschlusselement (50) über einen mit dem Entlüftungsventil (16) wirkverbundenen Mechanismus (24, 58), das Ventil (66) komplett öffnet.

2. Einfüllstutzen nach Anspruch 1, **dadurch gekennzeichnet, dass** die Führungsteile (66b) einwärts gerichtete Fortsätze von seitlich des Ventilteils (66) vorgesehenen Laschen (66a) sind.

3. Einfüllstutzen nach Anspruch 1 oder 2, **dadurch gekennzeichnet, dass** die mit den Führungsteilen (66b) zusammenwirkenden Bereiche der Betätigungsarme (1a) des Hebels (1) Steuerkurven (1c) sind.

## Claims

1. A filler neck for the fuel tank of a motor vehicle, having a housing (12,14), an outer closure (30) pivotable into the closed and open position, a second inner closure element (50) which is accommodated within the housing and opened by the filling nozzle (100), and having a ventilating valve (16) which opens automatically in the event of excess pressure in the fuel tank in order to equalize the pressure, a lever (1) being tiltably journalled in the housing (12) between outer closure (30) and inner closure element (50), which lever (1), operated by introduction of the filling nozzle (100), opens the ventilating valve (16) before the filling nozzle (100) actuates the inner closure element (50), **characterized in that** a lever (1) is provided, which lever is tiltably mounted on the housing (12) and which, actuated by the fuel nozzle (100) when the latter is introduced, opens the ventilating valve (16) even before the fuel nozzle (100) swivels open the second closure element (50).

2. The filler neck as claimed in claim 1, **characterized in that** the guide parts (66b) are inwardly directed extensions of tabs (66a) provided to the side of the valve part (66).

3. The filler neck as claimed of claim 1, **characterized in that** those regions of the actuating arms (1a) of the lever (1) which interact with the guide parts (66b) are radial cams (1c).

## Revendications

1. Tubulure de remplissage du réservoir de carburant d'un véhicule automobile, comportant un boîtier (12, 14) doté d'une fermeture (30) extérieure apte à pivoter dans la position d'ouverture et de fermeture et d'un deuxième élément de fermeture intérieur (50) monté à l'intérieur du boîtier et rabattable au moyen du pistolet distributeur (100), et d'un clapet de ventilation (16) qui s'ouvre automatiquement lors d'une surpression dans le réservoir de carburant en vue de compenser la pression, un levier (1) étant monté à pivotement au niveau du boîtier (12) entre la fermeture extérieure (30) et l'élément de fermeture intérieur (50), lequel levier est actionné par le pistolet distributeur (100) lorsque celui-ci est introduit et ouvre déjà le clapet de ventilation (16) avant que le pistolet distributeur (100) n'actionne l'élément de fermeture intérieur (50), **caractérisée en ce que** le levier (1) comporte deux bras d'actionnement latéraux (1a) qui s'accrochent sous des pièces de guidage (66b) prévues sur la pièce de clapet (66), et **en ce que** l'élément de fermeture intérieur (50) ouvre complètement le clapet (66) au moyen d'un mécanisme (24,58)relié fonctionnellement au clapet de ventilation intérieur (16).

2. Tubulure selon la revendication 1, **caractérisée en ce que** les pièces de guidage (66b) sont des saillies, dirigées vers l'intérieur, d'attaches (66a) prévues latéralement sur la pièce de clapet (66).

3. Tubulure selon la revendication 1 ou 2, **caractérisée en ce que** les zones, coopérant avec les pièces de guidage (66b), des bras d'actionnement (1a) du levier (1) sont des cames de commande (1c).
